# EUROPEAN PATENT SPECIFICATION

(11) **EP 0 666 663 B1**
(45) Date of publication and mention of the grant of the patent: **11.12.2002**
(21) Application number: 95200192.3
(22) Date of filing: 27.01.1995
(51) Int. Cl.: H04L 9/18

(54) **Cryptographic device**
Verschlüsselungseinrichtung
Dispositif cryptographique

(30) Priority: 04.02.1994 NL 9400176
(43) Date of publication of application: 09.08.1995
(73) Proprietor: Koninklijke KPN N.V., 9726 AE Groningen (NL)
(72) Inventor: Boly, Jean Paul, NL-2381 BL Zoeterwoude (NL); de Rooij, Peter Jacobus Nicolaas, NL-2593 XX The Hague (NL); Roelofsen, Gerrit, NL-2805 DD Gouda (NL); van Tilburg, Johan, NL-2751 SR Zoetermeer (NL)

(56) References cited:
- US-A- 4 447 672
- US-A- 4 815 130
- 1984 INTERNATIONAL ZURICH SEMINAR ON DIGITAL COMMUNICATIONS, 6 March 1984, NEW YORK (US) pages 163 - 169 MASSEY ET AL. 'A SELF-SYNCHRONIZING DIGITAL SCRAMBLER FOR CRYPTOGRAPHIC PROTECTION OF DATA'

## Description

### A BACKGROUND OF THE INVENTION

The invention relates to a cryptographic system, comprising an encryption device on one side of a transmission system, for encrypting a first character stream into a second character stream, and a decryption device on another side of the transmission system, for decrypting the second character stream, presented via the transmission system, into a third character stream which under normal conditions is a replica of the first character stream, the first character stream being mixed in the encryption device with a fourth character stream generated in said encryption device, and the product of mixing resulting therefrom being presented as the second character stream to the transmission system, and the second character stream supplied via the transmission system being mixed in the decryption device with a fifth character stream generated in said decryption device and the product of mixing resulting therefrom being picked up from the device as the third character stream, the fourth character stream in the encryption device being a function of an internal character string, referred to as key string, and, by feedback, said fourth character stream, and the fifth character stream in the decryption device being a function of a key string, identical to the one in the encryption device, and, by feedback, said fifth character stream. The invention also relates to a cryptographic device for encrypting or decrypting a first character stream supplied to said device into a second character stream, said first character stream being mixed with a third character stream which is generated in said device and is a function of an internal character string, referred to as key string, and, by feedback, said third character stream.

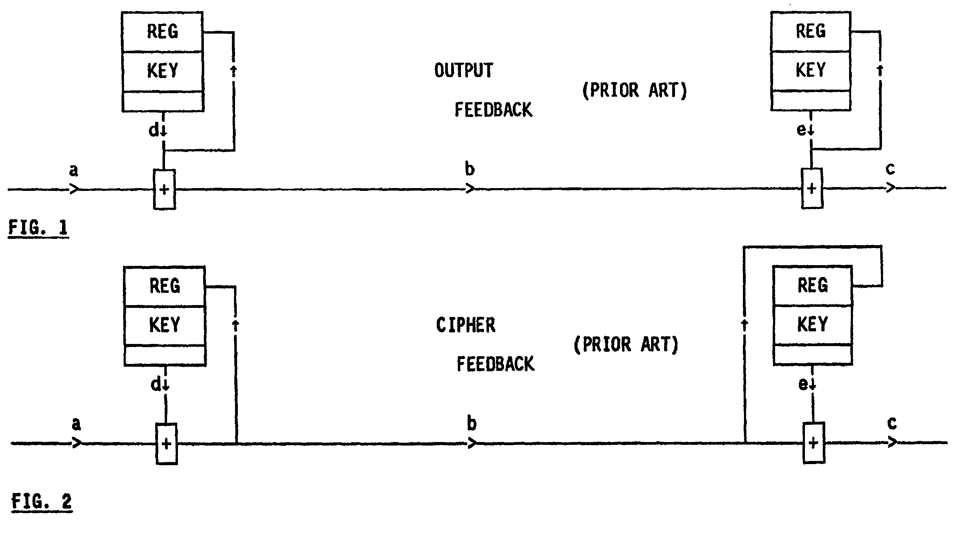

The known cryptographic system indicated above comprises cryptographic devices which operate in the so-called "Output Feedback Mode" (OFB), of which Fig. 1 gives a schematic illustration. A closely related cryptographic mode, the "Cipher Feedback Mode" (CFB) is depicted schematically in Fig. 2. Under normal conditions, the character stream (c) emitted by the decryption devices (on the right hand side in the figures) is a perfect replica of the character stream (a) presented to the encryption devices (on the left hand side in the figures). If, however, in the encrypted character stream (b) - which as a result of the encryption is completely different from the presented character stream - an error occurs, be it the change of the value of a character in said character stream (such as a "bit flip", in which a "1" in a bit stream becomes a "0" or vice versa), be it a character being omitted or, just the opposite, an additional character occurring, the cryptographic system will respond as follows:
- if, as represented in Fig. 1, the cryptographic devices operate in accordance with the OFB mode, the change in the value of a character in the encrypted character stream will, to be sure, cause a perturbation of the character stream (c) emitted by the decryption device, said character stream consequently not being a correct replica of the original character stream, but that perturbation will correct itself. The omission or the "insertion" of a character, however, causes a permanent perturbation in the output stream of the decryption device;
- if, as represented in Fig. 2, the cryptographic devices operate in accordance with the CFB mode, the change in the value of a character in the encrypted character stream will, as in the case of the OFB mode, cause a perturbation, for some time (in the case of OFB for only one bit, in the case of CFB for more bits), of the character stream (c) emitted by the decryption device which, however, is restored again after some time. The omission or the "insertion" of a character likewise does not, however, in the CFB mode cause any permanent perturbation in the output stream of the decryption device either, in these cases, too, the output stream of the decryption device being restored after some time. The restoration of the output stream of the decryption device (in the case of OFB therefore only in the event of "bit flip" and in the case of CFB in all cases) is caused by (in accordance with ISO/IEC Standard 10116:1991) the fed-back character stream being combined in accordance with a one-way function with the said key string (indicated in the figures by KEY).
The article "A self-synchronizing digital scrambler for cryptographic protection of data" by Massey et al in the 1984 International Zurich seminar on Digital Communications, pages 163 to 169, for instance discloses a system for "Self-Synchronizing Digital Scrambling" ().

While the self-correcting nature of the prior-art can often be advantageous, it can also be a drawback. In particular, the fact is that if the perturbations of the decrypted character stream are the result of wilful action by a third party (an "intruder"), such an action can in many cases not be detected on the receiving side (namely in those cases where the perturbation again corrects itself after a short while).

### B DESCRIPTION OF THE INVENTION

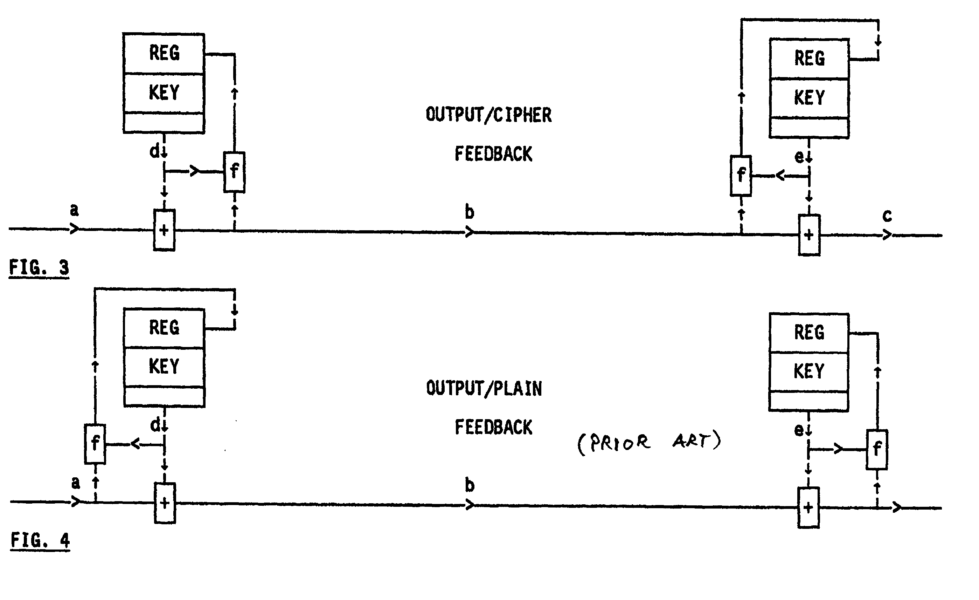

The invention provides at least one cryptographic mode, in which a perturbation of the encrypted character stream, irrespective of what type of perturbation, always results in a permanent perturbation of the output stream of the decryption device. To that end, the invention provides feedback, in conformity with the OFB mode, of the "KEY OUTPUT" (d and e in Fig. 1 and 2) and feedback, in accordance with a specific function, of the encrypted character stream. These options are shown schematically in Fig. 3 and 4. The cryptographic mode as shown in figure 4 is related to US-A-4815130 (Lee et al). The present invention is an alternative for this prior-art cryptographic mode. US-A-4815130 discloses in a cryptographic mode in which also a perturbation of an encrypted character stream always results in a permanent perturbation of the output stream. The prior-art mode provides feedback of the "KEY OUTPUT" (d and e in Fig. 1 and 2) and feedback, contrary to the invention, of the original character stream on the encryption side, and of the output character stream on the decryption side. The prior-art cryptographic mode according to US-A-4815130 could be called "Output/Plain Feedback" (OPFB) mode, while the mode according to the present invention could be called "Output/Cipher Feedback" (OCFB) mode.

The Tables 1 and 2 show the results of the encryption and decryption of a bit stream in accordance with the OFB mode and the CFB mode. At the same time, the result is also shown of a perturbation in the encrypted bit stream, viz. a "bit flip", a "bit deletion" and a "bit insertion" of the 20th bit (in the tables this is the bit underneath the letter M in the text line "ENCRYPTED BIT STREAM". [lacuna] The following is shown for the various modes:
- the PLAIN TEXT BIT STREAM (<BITS.IN>), in Figures 1-4 represented by a (a bit stream having a regular pattern was chosen so as to make it fairly simple to look at the results);
- the ENCRYPTED BIT STREAM (<BITS.ENC>), in Figures 1-4 represented by b, and
- the DECRYPTED BIT STREAM (<BITS.DEC>), in Figures 1-4 represented by c; then the results of the perturbations:
   * BIT FLIP OF BIT NUMBER 20 RESULTS INTO:
      ENCRYPTED BIT STREAM (<BIT.ENC>)
      DECRYPTED BIT STREAM (<BITS.DEC>);
   * BIT DELETION OF BIT NUMBER 20 RESULTS INTO:
      ENCRYPTED BIT STREAM (<BIT.ENC>)
      DECRYPTED BIT STREAM (<BITS.DEC>);
   * BIT INSERTION AFTER BIT NUMBER 20 RESULTS INTO:
      ENCRYPTED BIT STREAM (<BIT.ENC>)
      DECRYPTED BIT STREAM (<BITS.DEC>)

From Tables 1 and 2 it can be gathered that in both cases, the OFB mode and the CFB mode, automatic restoration takes place in the event of a "bit flip", while in the CFB mode the output stream is also restored after a bit has been omitted or inserted.

Table 3 depicts the results of encryption and decryption of the same bit stream in accordance with the first mode of the invention, which hereinafter is referred to as "Output/Cipher Feedback" (OCFB) mode. It can be seen that any type of perturbation results in an irreparable perturbation of the bit stream at the output of the decryption device. Table 4 depicts the results of the encryption and decryption of the same bit stream in accordance with the above mentioned prior art referred to as "Output/Plain Feedback" (OPFB) mode. It can be seen that in this mode, too, any type of perturbation results in an irreparable perturbation of the bit stream at the output of the decryption device. Tables 5 and 6 give the source code of programs in which the operation of an encryption device and decryption device in accordance with various modes can be demonstrated, as well as the effects of perturbations of the encrypted bit stream on the decrypted bit stream as shown in Tables 1-4.

### C DESCRIPTION OF THE FIGURES

Fig. 1 schematically shows an OFB encryption device and an OFB decryption device, linked to one another by a transmission medium.

Fig. 2 schematically shows a CFB encryption device and a CFB decryption device, linked to one another by a transmission medium.

Fig. 3 schematically shows an OCFB encryption device and an OCFB decryption device, linked to one another by a transmission medium, according to the invention.

Fig. 4 schematically shows a prior-art OPFB encryption device and an OPFB decryption device, linked to one another by a transmission medium.

Fig. 5 shows, in detail, a specific embodiment of a CFB encryption module in accordance with the simulation program shown in Table 5; the operations schematically indicated in the figure are provided with references to the corresponding line numbers in said program.

Fig. 6 shows, in detail, a specific embodiment of a CFB decryption module in accordance with the simulation program shown in Table 6; the operations schematically indicated in the figure are provided with references to the corresponding line numbers in said program.

Fig. 7 shows, in detail, a specific embodiment of an OFB encryption module in accordance with the simulation program shown in Table 5; the operations schematically indicated in the figure are provided with references to the corresponding line numbers in said program.

Fig. 8 shows, in detail, a specific embodiment of an OFB decryption module in accordance with the simulation program shown in Table 6; the operations schematically indicated in the figure are provided with references to the corresponding line numbers in said program.

Fig. 9 shows, in detail, a specific embodiment of an OCFB encryption module in accordance with the simulation program shown in Table 5; the operations schematically indicated in the figure are provided with references to the corresponding line numbers in said program.

Fig. 10 shows, in detail, a specific embodiment of an OCFB decryption module in accordance with the simulation program shown in Table 6; the operations schematically indicated in the figure are provided with references to the corresponding line numbers in said program.

Fig. 11 shows, in detail, an improved specific embodiment of an OCFB encryption module in accordance with the simulation program shown in Table 5; the operations schematically indicated in the figure are provided with references to the corresponding line numbers in said program.

Fig. 12 shows, in detail, an improved specific embodiment of an OCFB decryption module in accordance with the simulation program shown in Table 6; the operations schematically indicated in the figure are provided with references to the corresponding line numbers in said program.

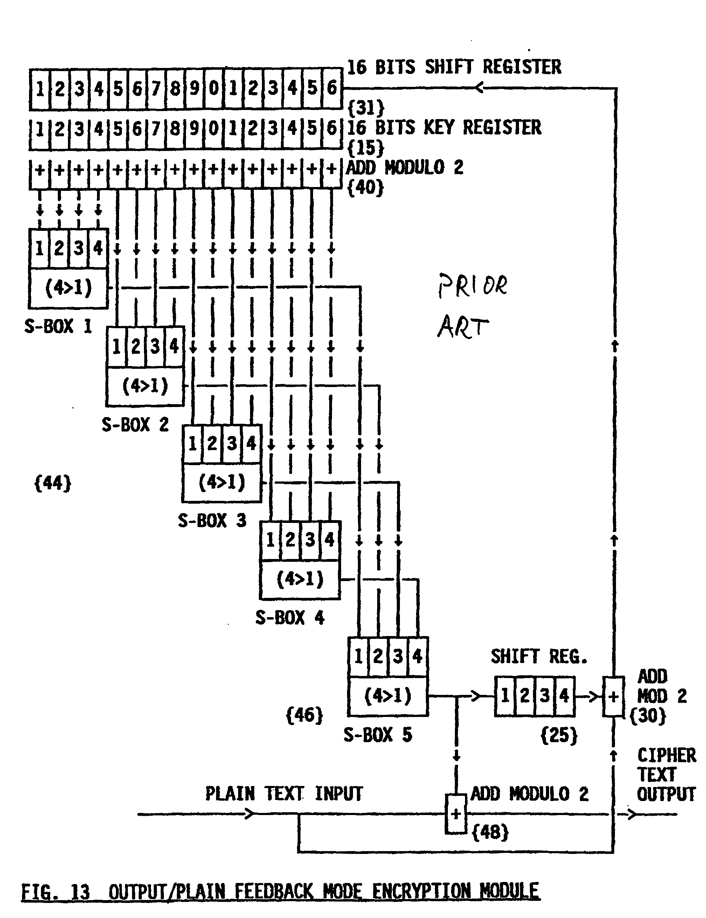

Fig. 13 shows, in detail, a specific embodiment of an OPFB encryption module in accordance with the simulation program shown in Table 5; the operations schematically indicated in the figure are provided with references to the corresponding line numbers in said program.

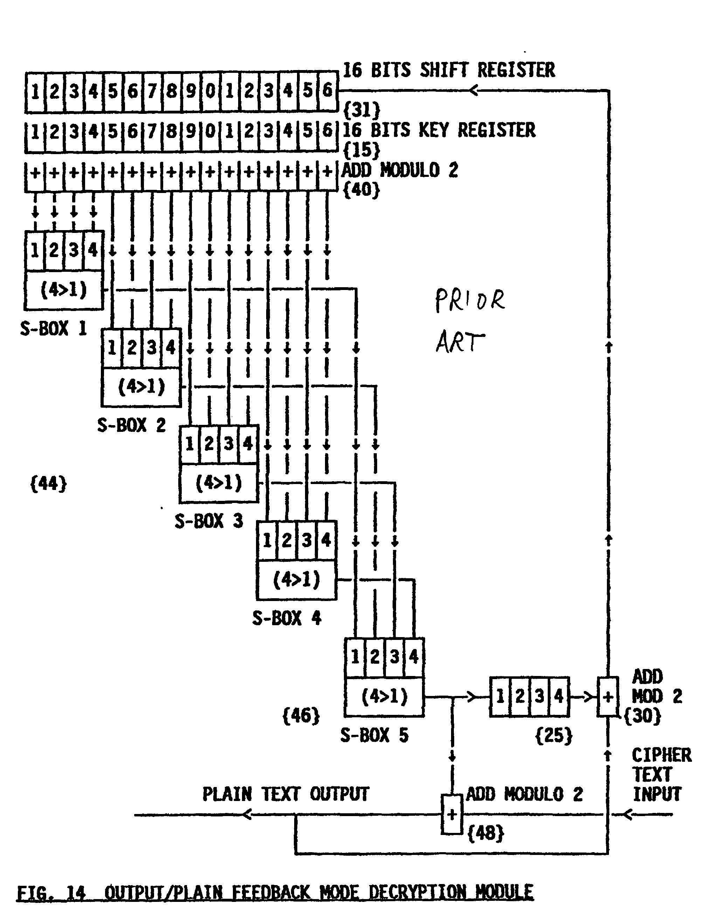

Fig. 14 shows, in detail, a specific embodiment of an OPFB decryption module in accordance with the simulation program shown in Table 6; the operations schematically indicated in the figure are provided with references to the corresponding line numbers in said program.

In Fig. 1, a bit stream a is added modulo 2 to an encryption bit stream d, resulting in encrypted bit stream b. This is decrypted again, on the right hand side in the figure, by modulo-2 addition with a decryption bit stream e, identical to encryption bit stream d. The resulting bit stream e is an exact replica of the original "plain text" bit stream a. Bit stream d and bit stream e are both generated by means of a secret key bit string KEY which is identical on both sides of the system. The bit strings d and e are fed back and, via a register REG, are combined in accordance with a one-way function, for example in blockstream mode, with the key string.

In Fig. 2, a bit stream a is likewise added modulo 2 to an encryption bit stream d, resulting in encrypted bit stream b. This is decrypted again, on the right hand side in the figure, by modulo-2 addition with a decryption bit stream e, identical to encryption bit stream d. The resulting bit stream e is an exact replica of the original "plain text" bit stream a. Bit stream d and bit stream e are both generated by means of a secret key bit string KEY which is identical on both sides of the system. In the mode shown in this figure, however, it is not the bit strings d and e which are fed back and, via a register REG, combined in accordance with a one-way function with the key string KEY, but (on both sides of the system) the encrypted bit stream b.

In the above, the drawbacks of the known modes have already been considered, i.e. the self-correcting nature, as result of which possible manipulations in the encrypted bit stream b cannot necessarily be detected.

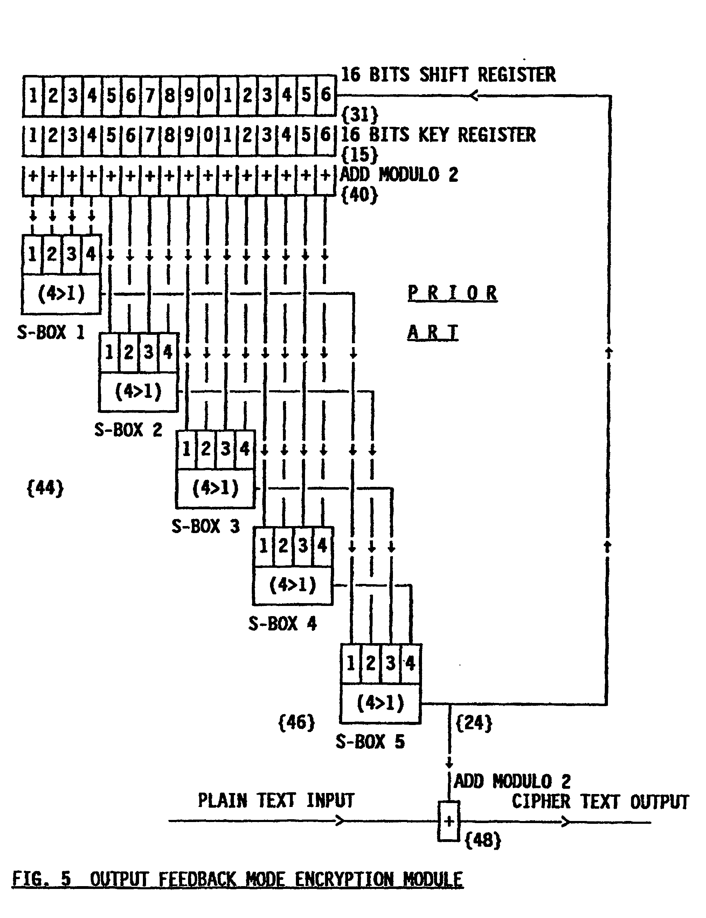

In Fig. 5, the plain text input bit stream is added modulo 2 to an encryption bit stream which is generated by feeding said bit stream to a 16-bit shift register. The content of said shift register is added modulo 2, in four strings of 4 bits to four strings of 4 bits into which a 16-bit key register is subdivided, resulting in four 4-bit strings, S-BOX 1...S-BOX 4. Each of those strings is subjected to an "S(election)-BOX" operation (see subroutine S-BOX, program line 54), resulting, in each case, in one bit value per string. These four bits are again combined into one string, S-BOX 5 which is likewise subjected to an S-BOX operation, resulting in one encryption bit. This is then added modulo 2 to the first plain text bit to appear, resulting in the cipher text; moreover, (the value of) the output bit is passed back to the input of the 16-bit shift register.

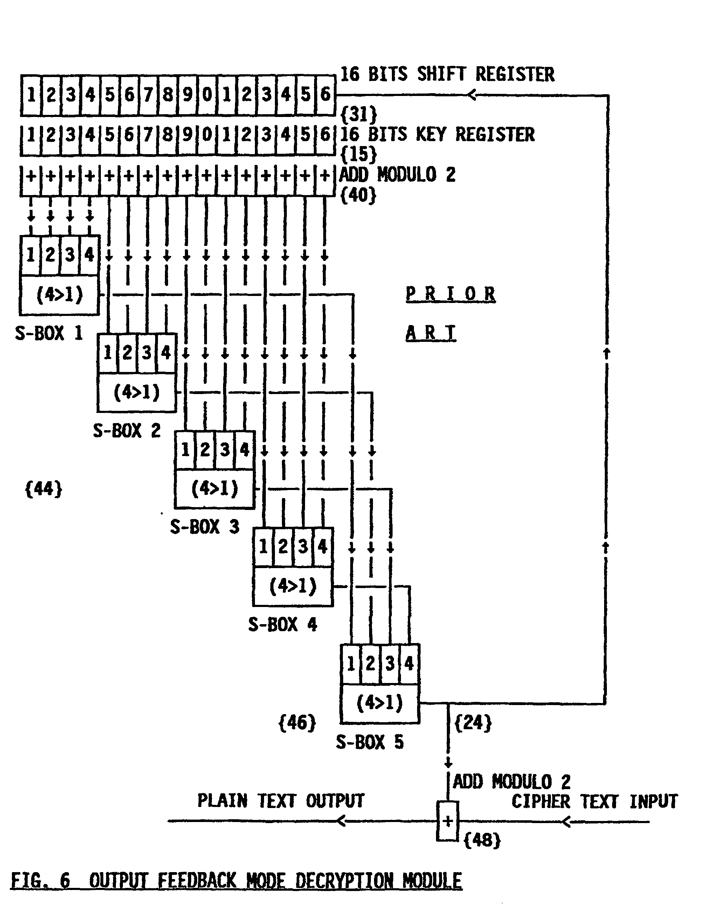

In Fig. 6, the cipher text (received from the encryption module) is added modulo 2 to a decryption bit which is generated in precisely the same manner as the encryption bit in the encryption module from Fig. 5. The result is - at least if the cipher text has not been perturbed en route - a replica of the original plain text. The effects of perturbations en route, in the transmission medium, have already been discussed in the above and hereinafter are additionally illustrated in another form.

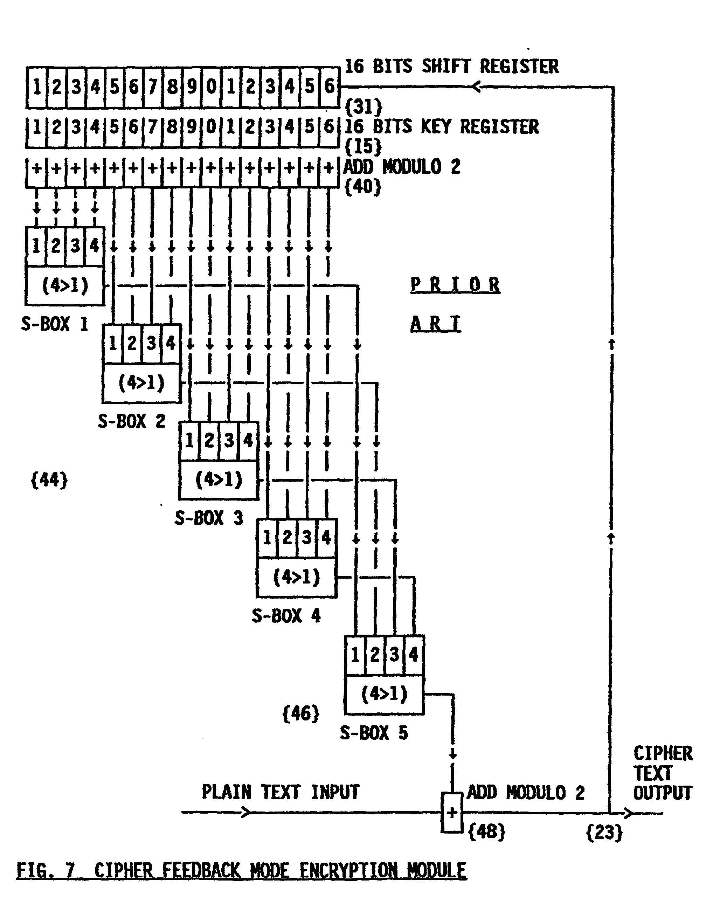

The operation of the encryption device from Fig. 7 is by and large the same as that from Fig. 5, the difference being that it is not, each time, the value of the last encryption bit which is passed back to the input of the 16-bit register, but the value of the last encrypted bit, in other words the last cipher text bit. To simulate this mode, use can be made of the same program from Table 5, the parameter "MODE" (see line 13) being set to "2" (see also line 24).

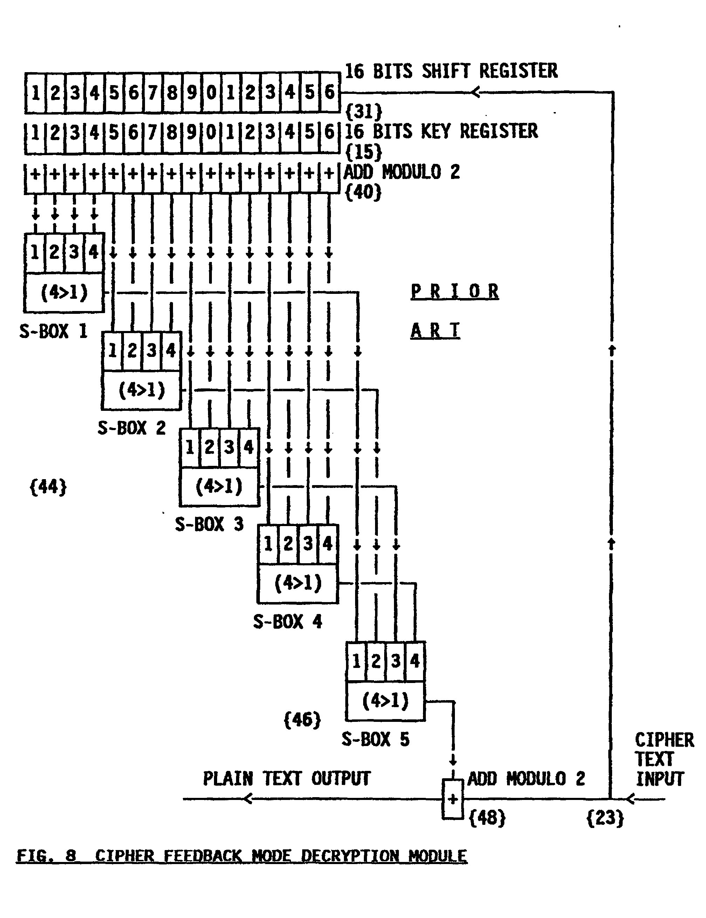

The operation of the decryption device from Fig. 8 again corresponds to that of the encryption device from Fig. 7, provided that in each case the last-received cipher text bit is fed to the input of the 16-bit shift register. As a result of the cipher text bit stream also being added modulo 2 to the decryption bit stream produced via the shift register, the key register and the five S-BOXES, a replica of the original plain text bit stream is produced once more. The effects of perturbations en route, in the transmission medium, have already been discussed in the above and hereinafter are additionally illustrated in another form.

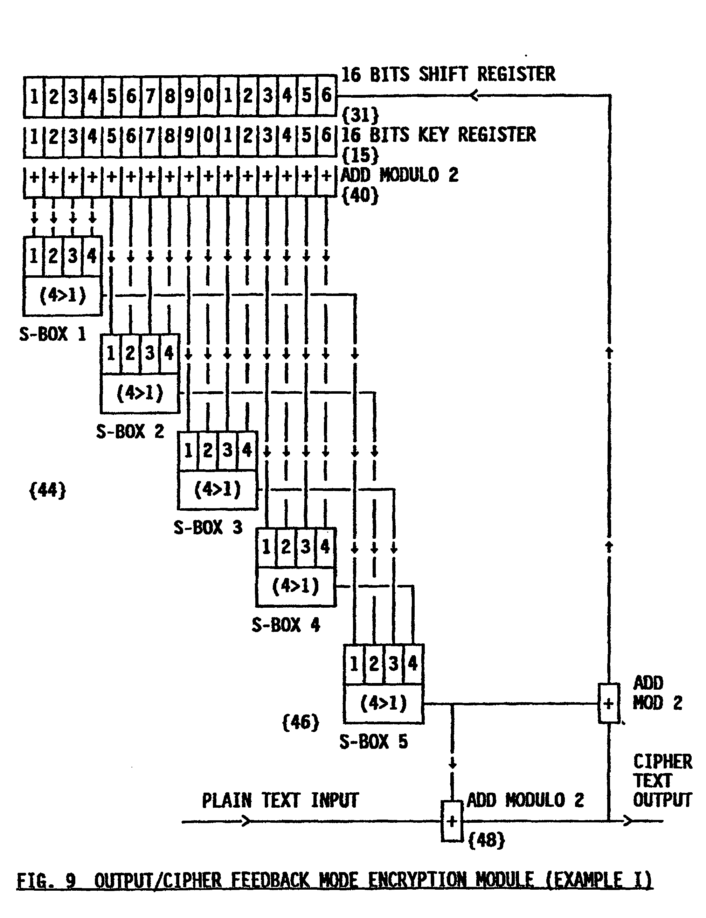

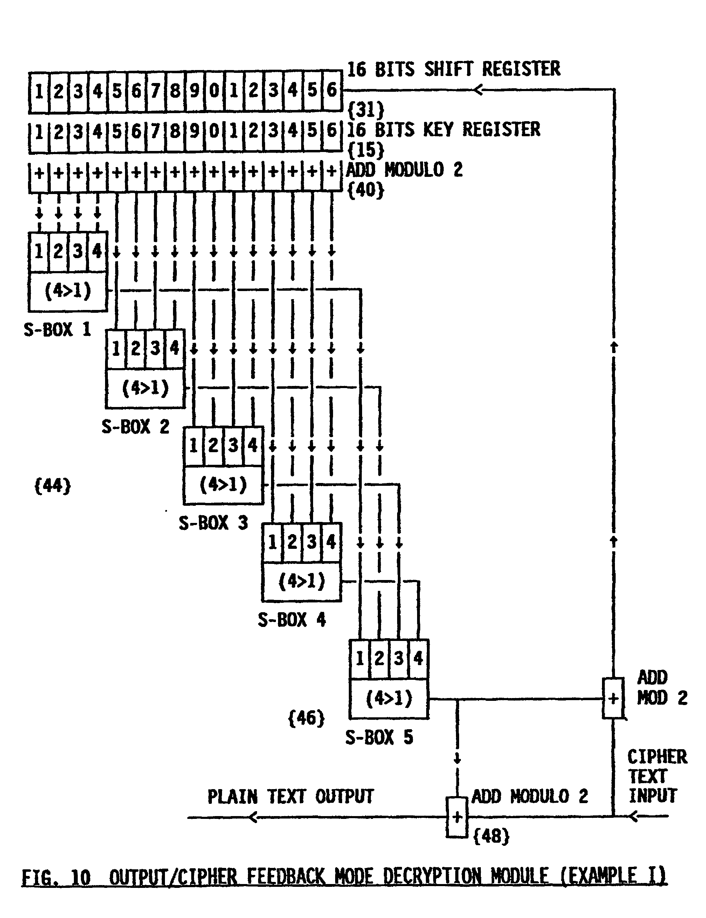

The encryption device from Fig. 9 and the decryption device from Fig. 10 form the simplest embodiment of a cryptographic device in accordance with the O(utput)C(ipher)FB mode presented by the present invention. In this mode, both the encryption bits, coming from the output of S-BOX 5 and the encrypted bits (the cipher text bits) are passed back to the input of the shift register, according to a function which in the simplest form consists of mixing the two bits by modulo-2 addition. Other than that the operation of the two devices is the same as that of the preceding devices. The effects of perturbations en route, in the transmission medium, have already been discussed in the above and hereinafter are additionally illustrated in another form.

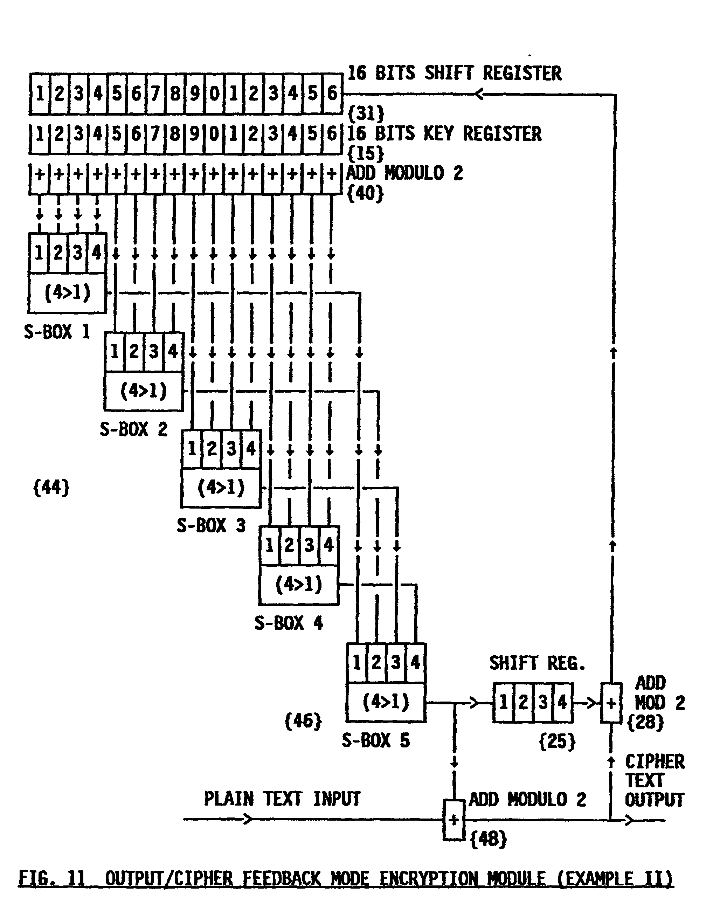

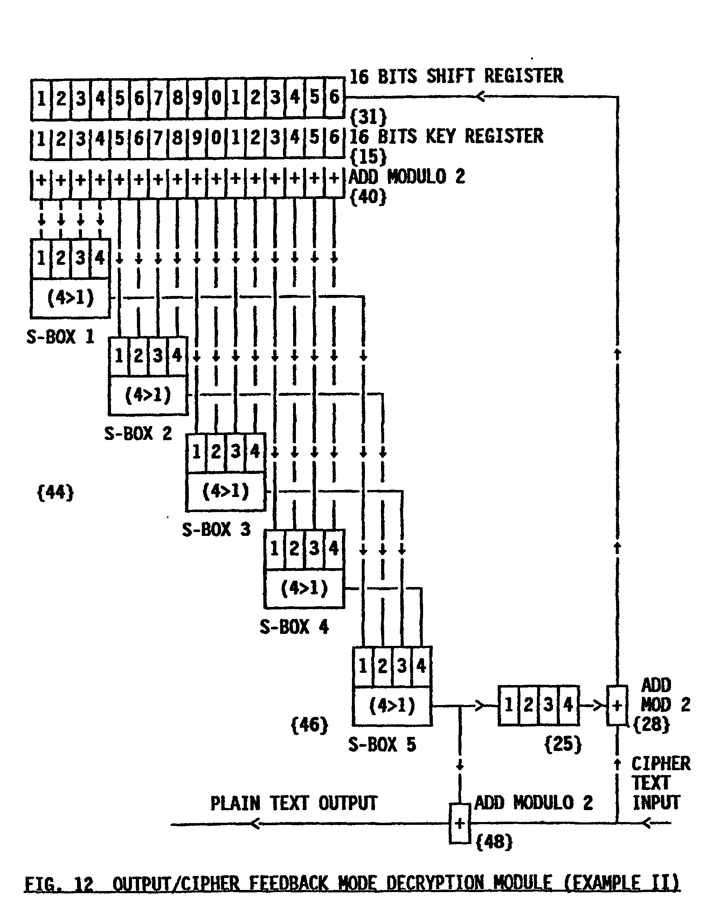

The encryption device from Fig. 11 and the decryption device from Fig. 12 are a variation of the devices from the Fig. 9 and 10; these provide slightly stronger cryptographic protection than the devices from the Fig. 9 and 10, owing to the encryption bit stream from S-BOX 5 first being delayed, via a 4-bit shift register, before being added modulo 2 to the encrypted bits. In the simulation programs from Table 5 and Table 6, said delay is carried out in line 25.

To enhance the cryptographic strength, in the preceding examples, in the devices from the Fig. 11 and 12, the encryption bit stream from S-BOX 5 was first delayed before mixing, via modulo-2 addition, with the bit stream fed back to the shift register; it is equally possible, instead thereof or in addition thereto, for the other bit stream to be passed back to the shift register via modulo-2 addition first being delayed. Instead of the bit streams to be fed back being delayed, they can also first be encrypted (internally). To this end it is possible, in the specific embodiments from the Fig. 11 and 12, for the 4-bit shift register to be replaced by a sixth S-BOX, whose operation is identical to S-BOX 1-5 and carries out a simple cryptographic one-way operation on the bit stream to be fed back. Preferably, however, an (internal) encryption module is employed for this purpose, which causes the bit stream to be passed back to be encrypted in accordance with the known OFB or CFB mode or in accordance with a form (for example the simplest form, see Fig. 9) of the OCFB mode presented in the present application.

The effects of perturbations en route, in the transmission medium, have already been discussed in the above and are also illustrated hereinafter in another form.

Hereinafter, the effect of perturbations en route, in the transmission medium between the encryption device and the decryption device, is again illustrated for the various modes, but by means of a piece of (ASCII) text. The characters of this text have been converted, via their ASCII values, into a bit stream which is then encrypted and decrypted again. The decrypted bit stream is again converted into ASCII characters. Table 7 illustrates all this for encryption and decryption in the OFB mode, the original plain text (in characters) and the decrypted text being shown in the case that no perturbation takes place en route, in the case that en route a "bit flip" occurs of one of the encrypted bits, and in the case that en route a "bit deletion" first takes place, followed by, some hundred bits later, a "bit insertion". Table 8 illustrates the same cases for the CFB mode, Table 9 for the OCFB mode, and Table 10 for the OPFB mode. These illustrations clearly show that in the known modes automatic restoration of the transmitted text takes place, whereas if the modes according to the invention are employed, any type of perturbation of the encrypted bit stream leads to permanent perturbation of the re-encrypted text.

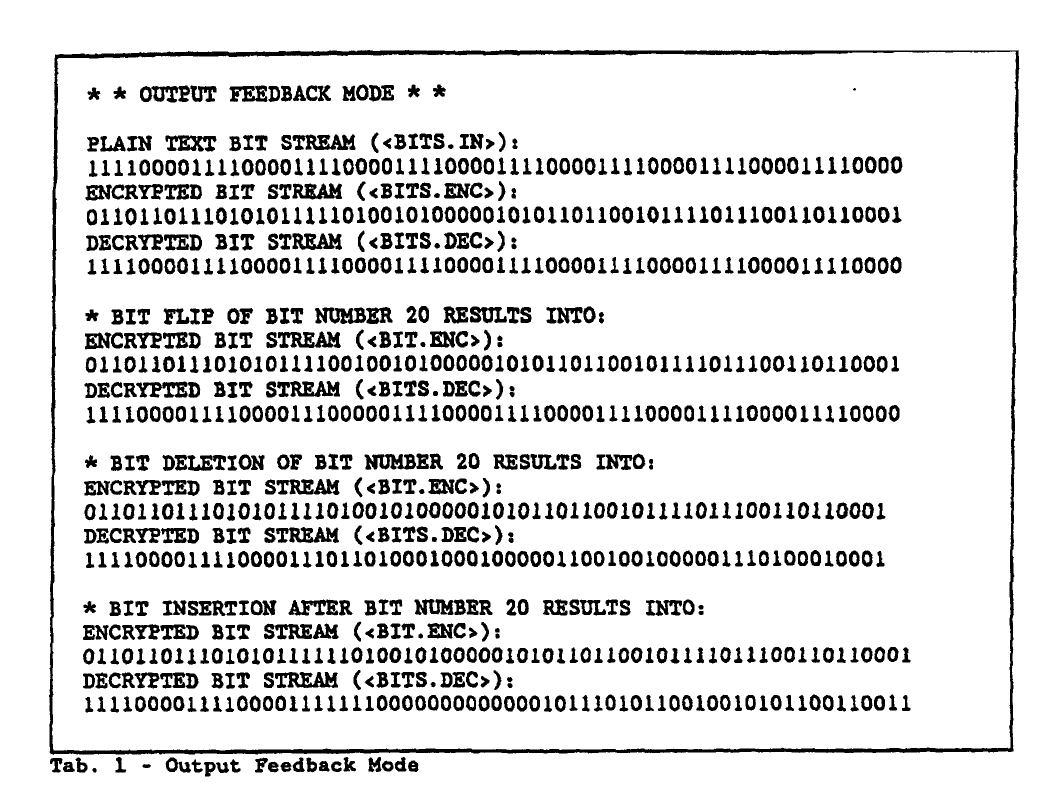

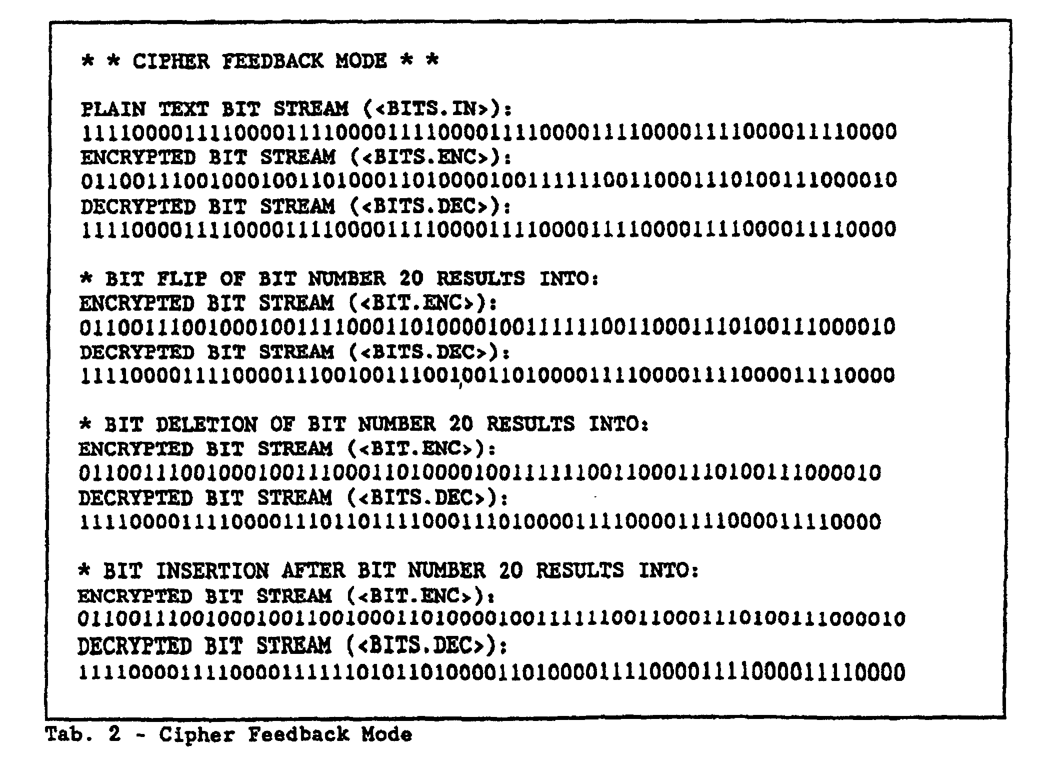

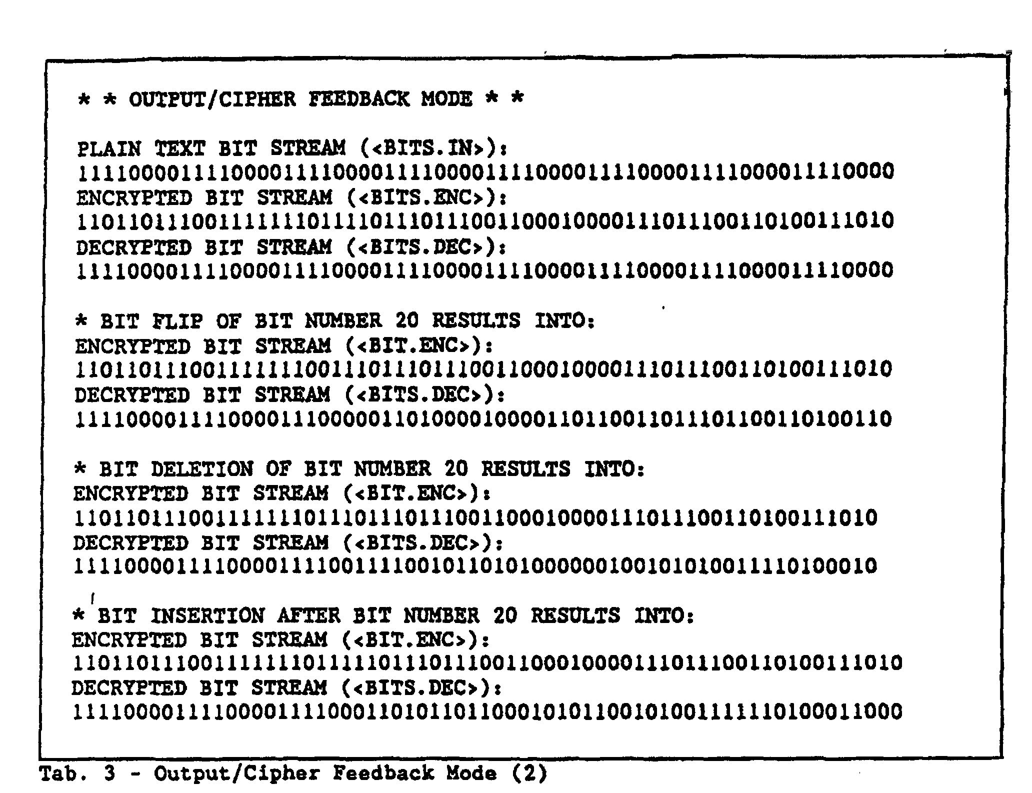

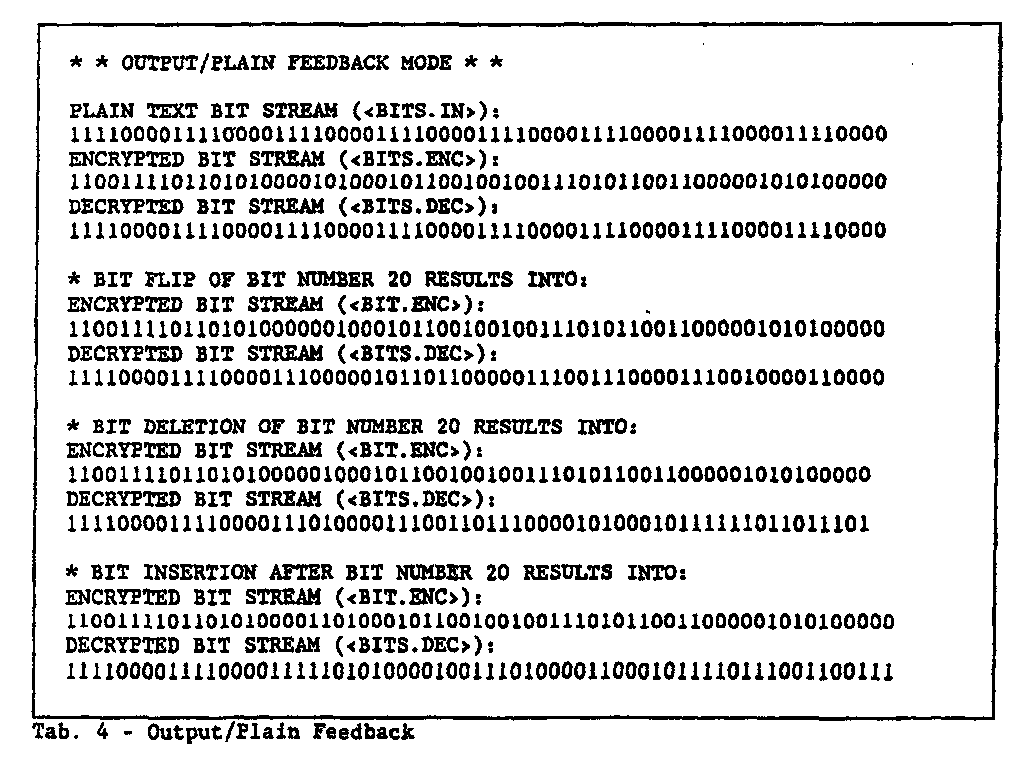

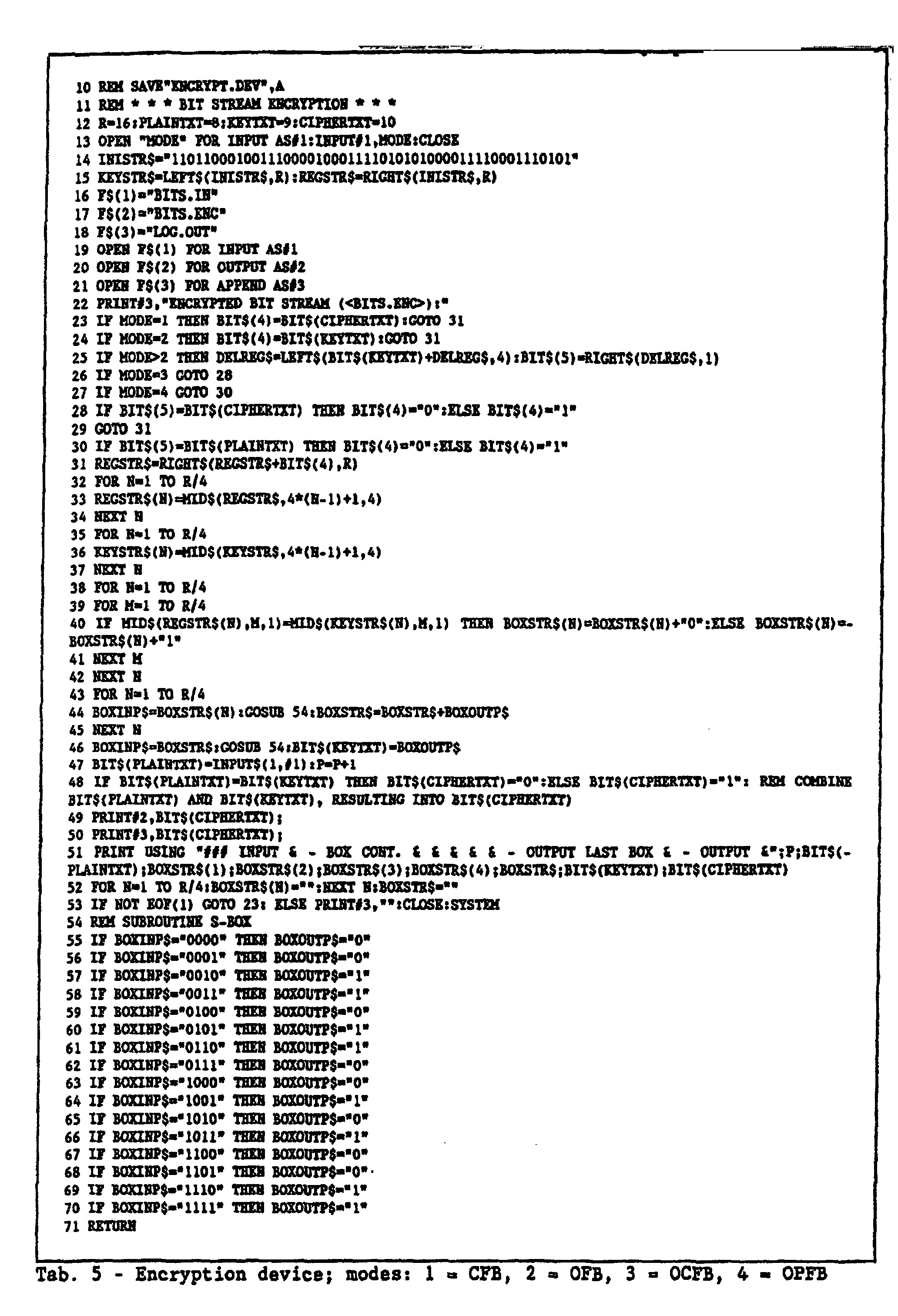

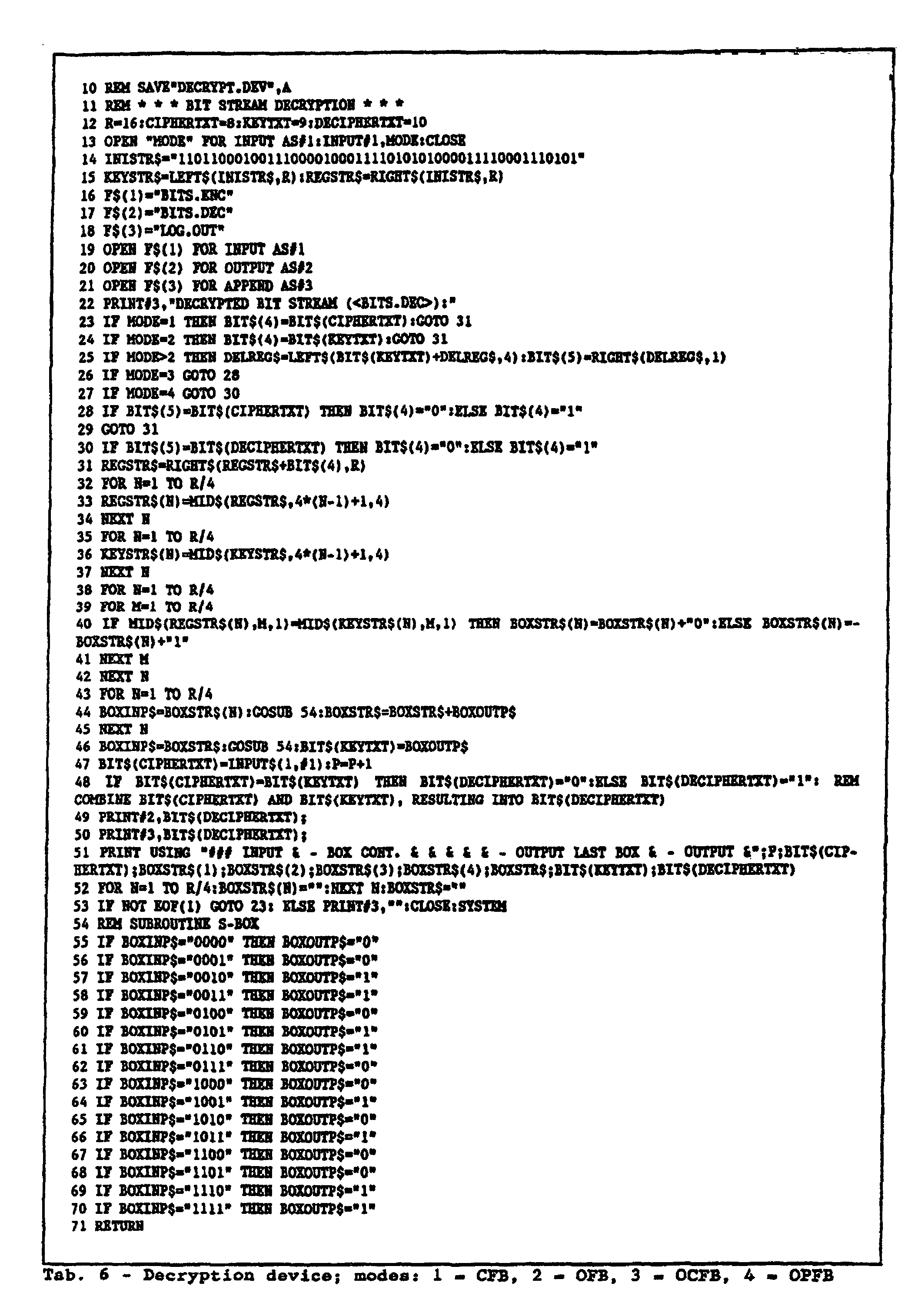

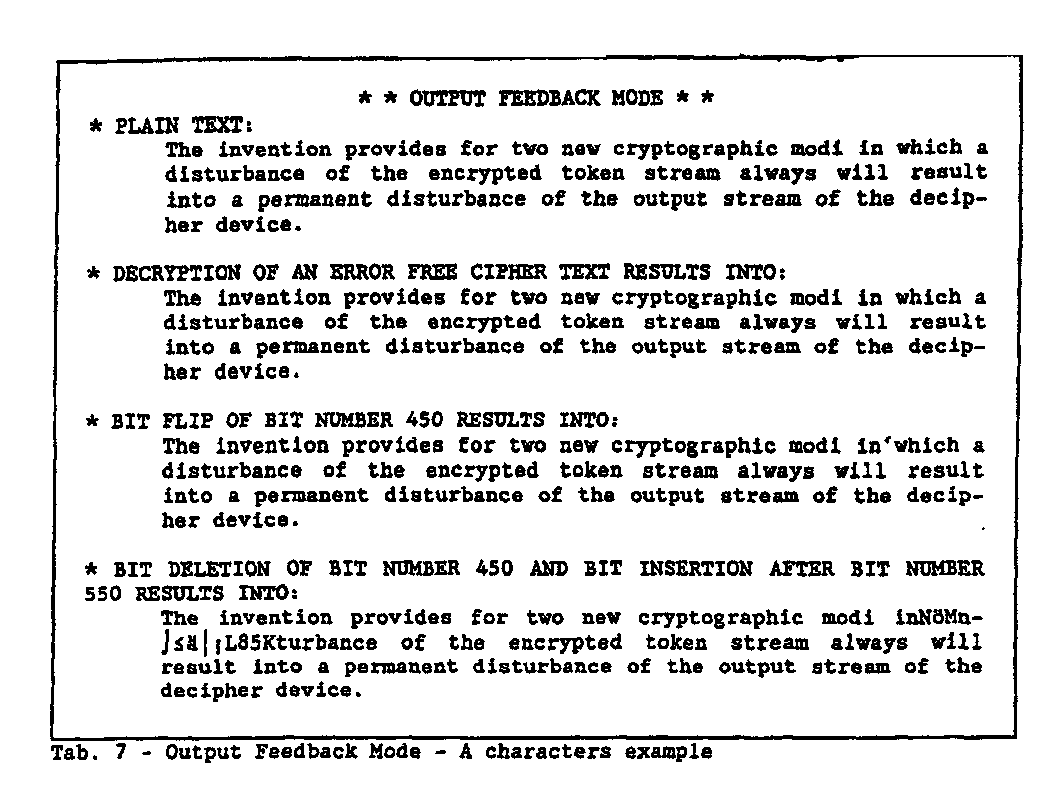

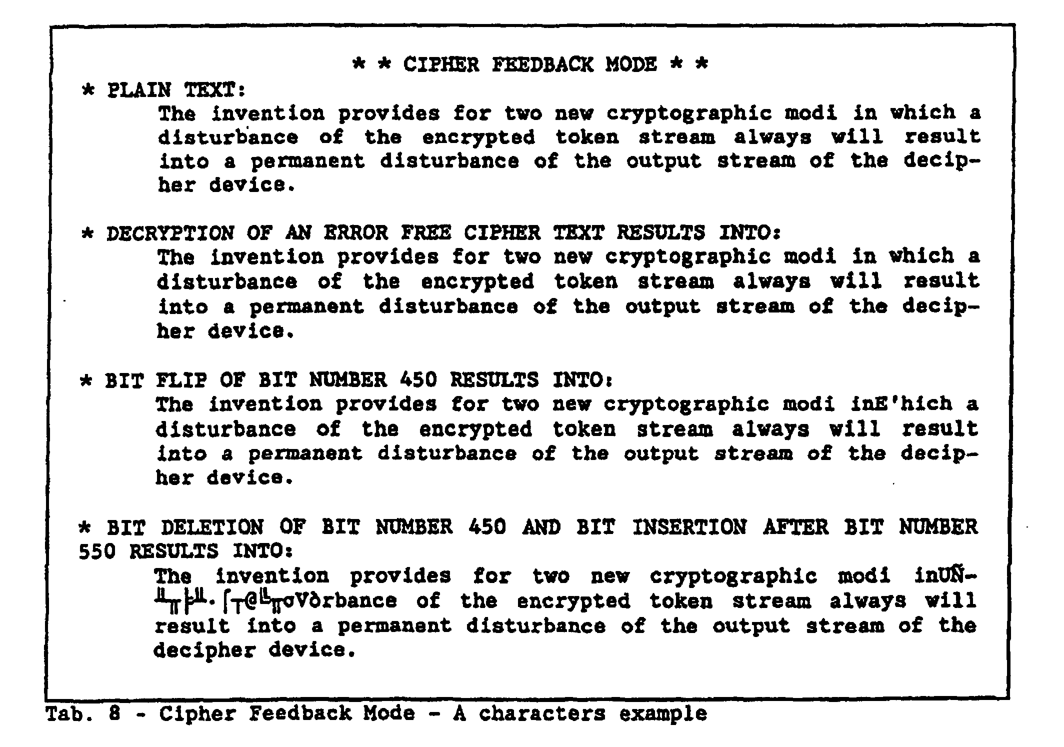

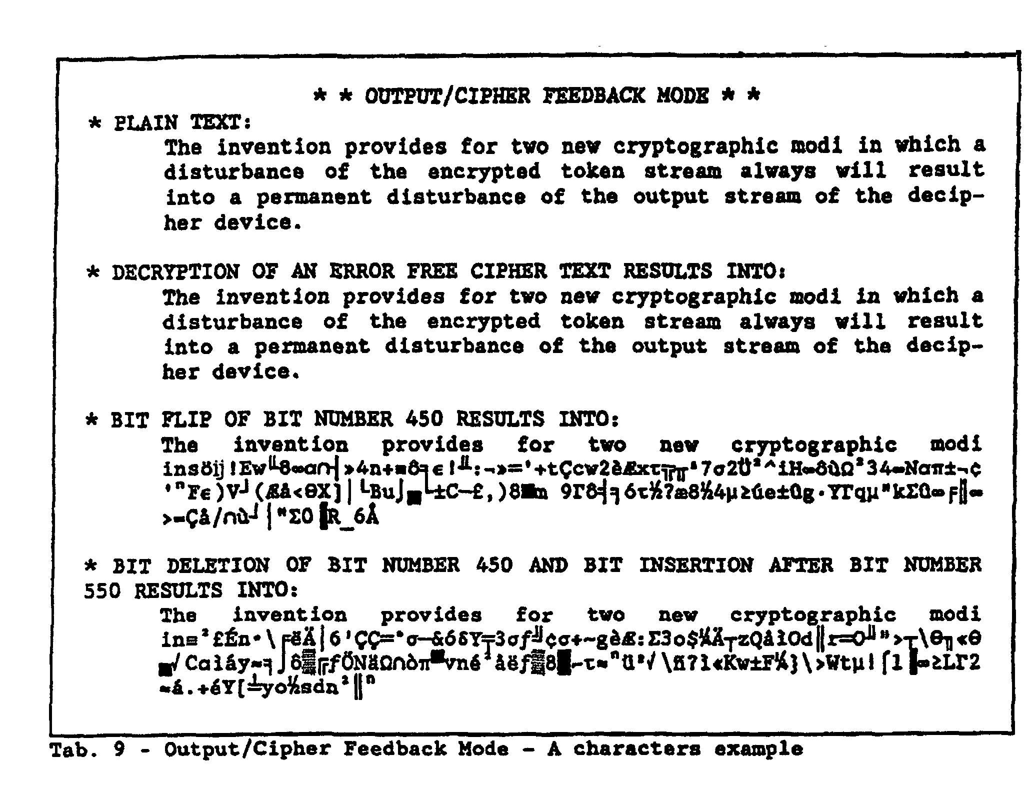

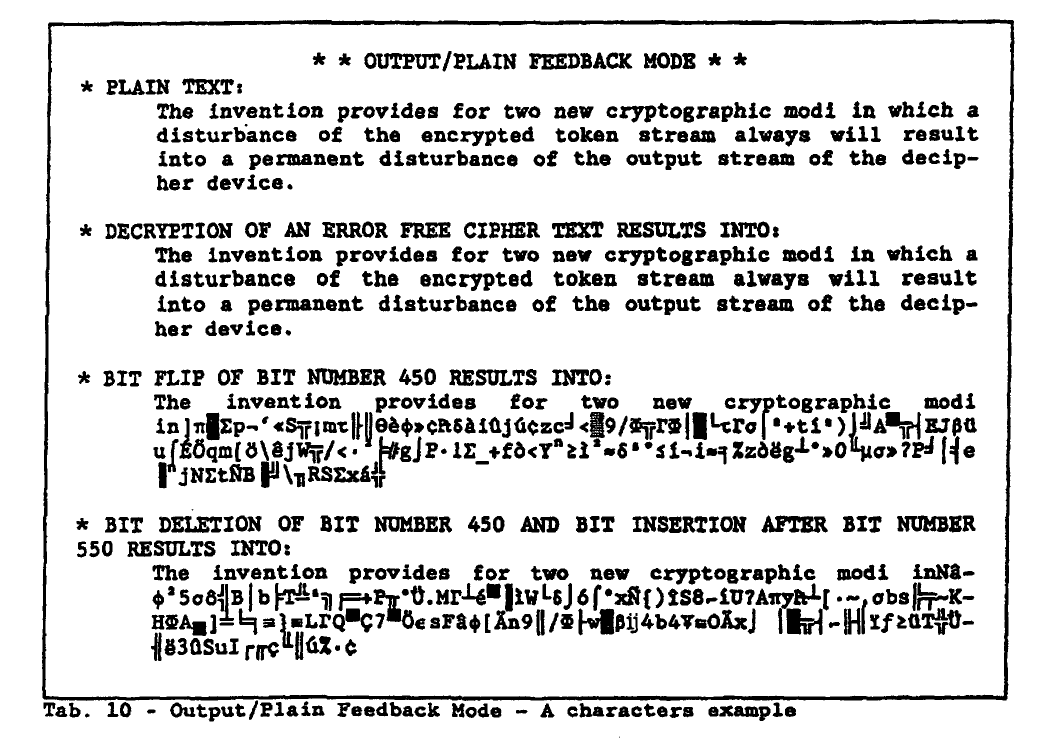

## Claims

1. Cryptographic system, comprising an encryption device on one side of a transmission system, for encrypting a first character stream (a) into a second character stream (b), and a decryption device on another side of the transmission system, for decrypting the second character stream (b), presented via the transmission system, into a third character stream (c) which under normal conditions is a replica of the first character stream (a),
the first character stream (a) being mixed in the encryption device with a fourth character stream (d) generated in said encryption device, and the product of mixing resulting therefrom being presented as the second character stream (b) to the transmission system, and the second character stream (b) supplied via the transmission system being mixed in the decryption device with a fifth character stream (e) generated in said decryption device and the product of mixing resulting therefrom being picked up from the device as the third character stream (c),
the fourth character stream (d) in the encryption device being a function of an internal character string, referred to as key string (KEY), and, by feedback, said fourth character stream (d), and the fifth character stream (e) in the decryption device being a function of a key string (KEY), identical to the one in the encryption device, and, by feedback, said fifth character stream (e), c**haracterized in that** in the encryption device the fourth character stream (d) is, moreover, by feedback, a function (f) of the second character stream (b) and in the decryption device the fifth character stream (e) is, moreover, by feedback, a function (f) of, likewise, the second character stream (b).

2. Cryptographic system according to Claim 1, **characterized in that** said feedback of, in the encryption device, the second and the fourth character stream (b and d) and, in the decryption device, of the second and the fifth character stream (b and e) is effected involving a delay of at least one of said fed-back character streams (b, d or e) by means of a delay module, both in the encryption device and in the decryption device.

3. Cryptographic system according to Claim 1, **characterized in that** said feedback of, in the encryption device, the second and the fourth character stream (b and d) and, in the decryption device, of the second and the fifth character stream (b and e) is effected involving an internal encryption of at least one of said fed-back character streams (b, d or e) by means of an internal encryption module, both in the encryption device and in the decryption device.

4. Encryption device for encrypting a first character stream (a) supplied to said device into a second character stream (b), said first character stream being mixed with a third character stream (d) which is generated in said device and is a function of an internal character string, referred to as key string (KEY), and, by feedback, said third character stream (d), **characterized in that** the third character stream (d) is, moreover, by feedback, a function of the second character stream (b).

5. Decryption device for decrypting a first character stream (b) supplied to said device into a second character stream (c), said first character stream being mixed with a third character stream (e) which is generated in said device and is a function of an internal character string, referred to as key string (KEY), and, by feedback, said third character stream (e), **characterized in that** the third character stream (e) is, moreover, by feedback, a function of the first character stream (b).

## Patentansprüche

1. Kryptographisches System mit einer Verschlüsselungsvorrichtung auf der einen Seite eines Übertragungssystems zum Verschlüsseln eines ersten Zeichenstromes (a) in einen zweiten Zeichenstrom (b) und eine Entschlüsselungsvorrichtung auf der anderen Seite des Übertragungssystems zum Entschlüsseln des zweiten Zeichenstromes (b), der über das Übertragungssystem vorgelegt wird, in einen dritten Zeichenstrom (c), der unter normalen Bedingungen eine Wiederholung des ersten Zeichenstroms ist (a),
wobei der erste Zeichenstrom (a) in der Verschlüsselungsvorrichtung mit einem vierten Zeichenstrom (d) gemischt wird, der in der besagten Verschlüsselungsvorrichtung erzeugt wird, und wobei das Produkt der sich ergebenden Mischung daraus als der zweite Zeichenstrom (b) dem Übertragungssystem vorgelegt wird, und wobei der zweite Zeichenstrom (b) über das Übertragungssystem in der Entschlüsselungsvorrichtung mit einem fünften Zeichenstrom (e) gemischt wird, der in der besagten Entschlüsselungsvorrichtung erzeugt wird, und wobei das Produkt der sich ergebenden Mischung daraus von der Vorrichtung als der dritte Zeichenstrom (c) aufgenommen wird, wobei der vierte Zeichenstrom (d) in der Verschlüsselungsvorrichtung eine Funktion eines internen Zeichenstranges ist, der als Schlüsselstrang (KEY) bezeichnet wird, und, durch Rückkopplung, des besagten vierten Zeichenstromes (d), und wobei der fünfte Zeichenstrom (e) in der Entschlüsselungsvorrichtung eine Funktion eines Schlüsselstranges (KEY) ist, der identisch ist zu dem in der Verschlüsselungsvorrichtung, und, durch Rückkopplung, des besagten fünften Zeichenstromes (e), **dadurch gekennzeichnet, dass** in der Verschlüsselungsvorrichtung der vierte Zeichenstrom (d) weiterhin, durch Rückkopplung, eine Funktion (f) des zweiten Zeichenstromes (b) ist und dass in der Entschlüsselungsvorrichtung der fünfte Zeichenstrom (e) weiterhin, durch Rückkopplung, eine Funktion (f) des gleichfalls zweiten Zeichenstromes (b) ist.

2. Kryptographisches System nach Anspruch 1, **dadurch gekennzeichnet, dass** in der Verschlüsselungsvorrichtung der zweite und der vierte Zeichenstrom (b und d) und in der Entschlüsselungsvorrichtung der zweite und der fünfte Zeichenstrom (b und e) b bewirkt werden durch eine Verzögerung von mindestens einem der besagten zurückgeführten Zeichenströme (b, d oder e) durch ein Verzögerungsmodul, sowohl in der Verschlüsselungsvorrichtung als auch in der Entschlüsselungsvorrichtung.

3. Kryptographisches System nach Anspruch 1, **dadurch gekennzeichnet, dass** die Rückkopplung, in der Verschlüsselungsvorrichtung, des zweiten und des vierten Zeichenstromes (b und d) und, in der Entschlüsselungsvorrichtung, des zweiten und des fünften Zeichenstromes (b und e) bewirkt werden durch eine interne Verschlüsselung von mindestens einem der besagten zurückgeführten Zeichenströme (b, d oder e) durch das Mittel eines internen Verschlüsselungsmodules, sowohl in der Verschlüsselungsvorrichtung als auch in der Entschlüsselungsvorrichtung.

4. Verschlüsselungsvorrichtung zum Verschlüsseln eines ersten Zeichenstromes (a), der der besagten Vorrichtung vorgelegt wird, in einen zweiten Zeichenstrom (b), wobei der besagte erste Zeichenstrom mit einem dritten Zeichenstrom (d) gemischt wird, der in der besagten Vorrichtung erzeugt wird und Funktion eines internen Zeichenstranges ist, der als Schlüsselstrang (KEY) bezeichnet wird, und, durch Rückkopplung, des besagten dritten Zeichenstromes (d), **dadurch gekennzeichnet, dass** der besagte dritte Zeichenstrom (d) weiterhin, durch Rückkopplung, eine Funktion des zweiten Zeichenstromes (b) ist.

5. Entschlüsselungsvorrichtung zum Entschlüsseln eines ersten Zeichenstromes (b), der der besagten Vorrichtung vorgelegt wird, in einen zweiten Zeichenstrom (c), wobei der besagte erste Zeichenstrom mit einem dritten Zeichenstrom (e) gemischt wird, der in der besagten Vorrichtung erzeugt wird und Funktion eines internen Zeichenstranges ist, der als Schlüsselstrang (KEY) bezeichnet wird, und, durch Rückkopplung, des besagten dritten Zeichenstromes (e), **dadurch gekennzeichnet, dass** der besagte dritte Zeichenstrom (e) weiterhin, durch Rückkopplung, eine Funktion des ersten Zeichenstromes (b) ist.

## Revendications

1. Système cryptographique comprenant un dispositif de cryptage situé d'un côté d'un système de transmission, pour crypter une première suite de caractères (a) en une seconde suite de caractères (b), et un dispositif de décryptage situé sur un autre côté du système de transmission, pour décrypter la seconde suite de caractères (b) présentée par l'intermédiaire du système de transmission, en une troisième suite de caractères (c) qui, dans des conditions normales, est une réplique de la première suite de caractères (a),
la première suite de caractères (a) étant mélangée, dans le dispositif de cryptage, à une quatrième suite de caractères (d) produite dans ledit dispositif de cryptage, et le produit du mélange résultant étant présenté en tant que seconde suite de caractères (b) au système de transmission, et la seconde suite de caractères (b) délivrée par l'intermédiaire du système de transmission étant mélangée, dans le dispositif de cryptage, à une cinquième suite de caractères (e) produite dans ledit dispositif de cryptage, et le produit du mélange résultant étant détecté par le dispositif en tant que troisième suite de caractères (c), la quatrième suite de caractères (d) dans le dispositif de cryptage étant une fonction d'une suite interne de caractères, désignée comme une suite formant clé (KEY), et, par réaction, de ladite quatrième suite de caractères (d) et la cinquième suite de caractères (e) dans le dispositif de décryptage étant fonction d'une suite formant clé (KEY) identique à la suite formant clé présente dans le dispositif de cryptage, et, par réaction, de ladite cinquième suite de caractères (e), **caractérisé en ce que** dans le dispositif de cryptage, la quatrième suite de caractères (d) est en outre, par réaction, une fonction (f) de la seconde suite de caractères (b) et, dans le dispositif de décryptage, la cinquième suite de caractères (e) est en outre, par réaction, une fonction (f) également de la seconde suite de caractères (b).

2. Système cryptographique selon la revendication 1, **caractérisé en ce que** la réaction, dans le dispositif de cryptage, des seconde et quatrième suites de caractères (b et d) et la réaction, dans le dispositif de cryptage, des seconde et cinquième suites de caractères (b et e) sont exécutées en mettant en oeuvre un retard d'au moins l'une desdites suites de caractères de réaction (b, d ou e) au moyen d'un module de retardement, à la fois dans le dispositif de cryptage et dans le dispositif de décryptage.

3. Système cryptographique selon la revendication 1, **caractérisé en ce que** ladite réaction, dans le dispositif de cryptage, des seconde et quatrième suites de caractères (b et d) et ladite réaction, dans le dispositif de cryptage, des seconde et cinquième suites de caractères (b et e) est réalisée moyennant la mise en oeuvre d'un cryptage interne d'au moins l'une desdites suites de caractères de réaction (b, d ou e) à l'aide d'un module de cryptage interne, à la fois dans le dispositif de cryptage et dans le dispositif de décryptage.

4. Dispositif de cryptage servant à crypter une première suite de caractères (a) envoyée auxdits dispositifs dans une seconde suite de caractères (b), ladite première suite de caractères étant mélangée à une troisième suite de caractères (d) qui est produite dans ledit dispositif et est une fonction d'une suite interne de caractères, désignée comme étant une suite formant clé (KEY) et, par réaction, de ladite troisième suite de caractères (d), **caractérisé en ce que** la troisième suite de caractères (d) est en outre, par réaction, fonction de la seconde suite de caractères (b).

5. Dispositif de décryptage pour détecter une première suite de caractères (b) envoyée audit dispositif en une seconde suite de caractères (c), ladite première suite de caractères étant mélangée à une troisième suite de caractères (c), qui est produite dans ledit dispositif et est une fonction d'une suite interne de caractères, désignée comme étant une suite formant clé (KEY), et par réaction, de ladite troisième suite de caractères (e), **caractérisé en ce que** la troisième suite de caractères (e) est en outre, par réaction, une fonction de la première suite de caractères (b).
